# EUROPÄISCHE PATENTSCHRIFT

(11) **EP 0 998 798 B1**
(45) Veröffentlichungstag und Bekanntmachung des Hinweises auf die Patenterteilung: **03.05.2006**
(21) Anmeldenummer: 98936124.1
(22) Anmeldetag: 10.06.1998
(51) Int. Cl.: H04J 14/02

(54) **VERFAHREN UND ANORDNUNG ZUR DATENÜBERTRAGUNG IM WELLENLÄNGENMULTIPLEXVERFAHREN IN EINEM OPTISCHEN RINGNETZ**
METHOD AND DEVICE FOR TRANSMITTING DATA BY WAVELENGTH DIVISION MULTIPLEXING IN AN OPTICAL RING NETWORK
PROCEDE ET DISPOSITIF POUR TRANSMETTRE DES DONNEES SELON UN PROCEDE DE MULTIPLEXAGE EN LONGUEUR D'ONDE DANS UN RESEAU ANNULAIRE OPTIQUE

(30) Priorität: 22.07.1997 DE 19731494
(43) Veröffentlichungstag der Anmeldung: 10.05.2000
(73) Patentinhaber: SIEMENS AKTIENGESELLSCHAFT, 80333 München (DE)
(72) Erfinder: MÜLLER, Horst, D-82069 Hohenschäftlarn (DE)
(86) Internationale Anmeldenummer: PCT/DE1998/001577
(87) Internationale Veröffentlichungsnummer: WO 1999/005811

(56) Entgegenhaltungen:
- EP-A- 0 651 528
- EP-A- 0 716 521
- JP-A- 8 018 592
- US-A- 5 442 623

## Beschreibung

Für die Übertragung von digitalen Signalen werden möglichst kostengünstige und zuverlässige Übertragungssysteme konzipiert. Bevorzugt werden Ringstrukturen für die Verbindung der einzelnen Netzelemente (Netzknoten/Terminals, Terminal-Multiplexer, Add/Drop-Multiplexer) verwendet, da es bei dieser Struktur möglich ist, "Working-Signale" und "Protection-Signale" auf getrennten Wegen zu führen, also jeweils zwei Netzelemente in der Regel über den kürzeren Ringabschnitt durch Working-Kanäle und zumindest im Störungsfall über den längeren Ringabschnitt durch Protection-Kanäle miteinander zu verbinden. Bei Leitungsunterbrechungen wird automatisch die Protection-Verbindung hergestellt, so daß es nur zu kurzzeitigen Störungen kommt.

Bei höheren Datenraten, wie sie bei der Synchronen Digital Hierarchie (SDH) oder dem Synchronous Optical Network (SONET) verwendet werden, werden Glasfasern wegen der großen Übertragungsbandbreite und ihrer geringen Dämpfung eingesetzt. Häufig wird das Wellenlängenmultiplexverfahren verwendet, um die Glasfaser optimal zu nutzen.

In der europäischen Patentanmeldung EP 0 716 521 A2 ist ein Ringnetz beschrieben, bei dem die Verbindung in einer ersten Richtung über eine erste Wellenlänge einer ersten Faser erfolgt und in der anderen Richtung über eine zweite Wellenlänge einer zweiten Faser erfolgt. Bei einer gestörten Verbindung erfolgt eine Neukonfiguration der beiden angrenzenden Netzknoten, so daß die Ersatzverbindungen in der ersten Richtung über die zweite Wellenlänge der ersten Faser und in der anderen Richtung über die erste Wellenlänge der zweiten Faser erfolgt. Im Ringnetz können auch mehr als zwei Fasern vorgesehen sein.

Die Hälfte der Bandbreite ist bei dieser Netzkonfiguration für die Ersatzschaltung reserviert.

In den Patentanmeldungen DE 43 37 089 A1, EP 0 651 529 A1 und EP 0 651 528 A1 sind optische Ringnetze beschrieben, bei denen für die Verbindungen von Netzelementen in einem Ring unterschiedliche Wellenlängen verwendet werden.

In der Patentanmeldung EP 716 521 A2 wird das bekannte Prinzip der Protection-Schaltung in einem Ringnetz beschrieben. Hier werden Signale jeweils zwischen zwei benachbarten Terminals mittels zweier unterschiedlicher Wellenlängen über ein mit zwei Fasern ausgeführtes Ringnetz übertragen. Bei einer Unterbrechung erfolgt eine Verbindung mit denselben Wellenlängen über die ungestörten Abschnitte des Ringnetzes.

Im US Patent 5,760,934 ist ein Ringnetz beschrieben, dessen Terminals für eine Protection-Schaltung ausgebildet sind. Zwischen jeweils zwei benachbarten Terminals erfolgt eine Duplex-Übertragung mit den gleichen Wellenlängen. Für jeden Übertragungsabschnitt wird jedoch eine andere Frequenz verwendet, so dass im Fall einer Protection-Schaltung keine Probleme auftreten. Bei einer Störung eines Übertragungsabschnittes oder einer Leitungsbaugruppe werden jedoch sowohl das Leitungseine Protection-Umschaltung durchgeführt und die Verbindung über den ungestörten Teil des Ringes hergestellt.

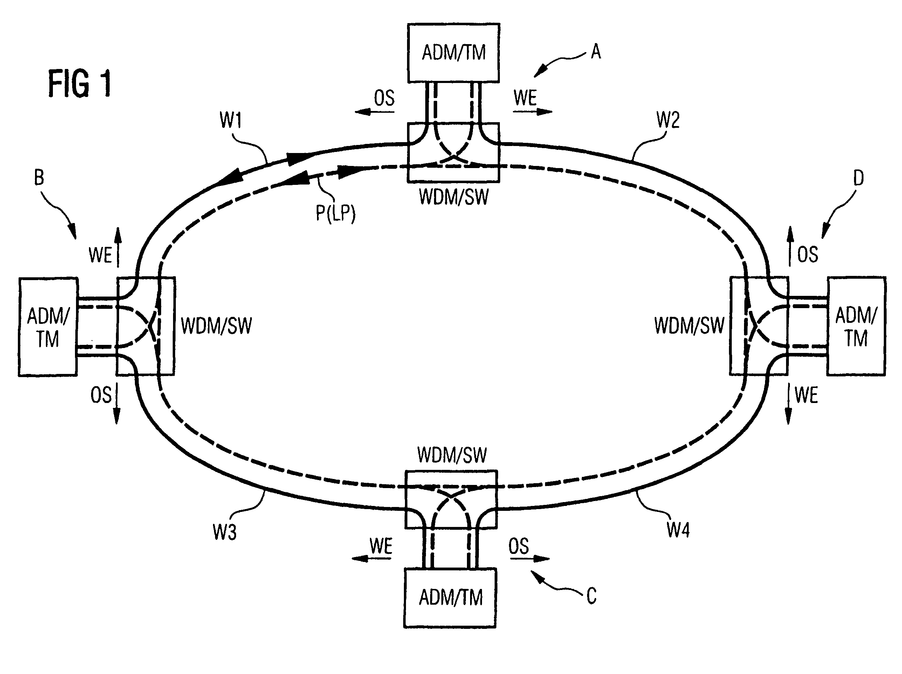

In der 22nd European Conference on Optical Communication - ECOC 96, Oslo, WeB.2.3, Seite 3.51 bis Seite 3.54 wird in dem Beitrag "First results of an experimental Coloured Section Ring" über eine in Figur 1 dargestellte Ringstruktur berichtet, bei der benachbarte Add/Drop-Multiplexer bidirektional über jeweils zwei Wellenleiter miteinander verbunden sind. Zwischen zwei benachbarten Add/Drop-Multiplexern wird für beide Übertragungsrichtungen nur eine Wellenlänge benutzt. Auf allen Übertragungsausschnitten werden aber unterschiedliche Wellenlängen verwendet. Das Aus- und Einkoppeln von Signalen erfolgt über optische Add/Drop-Multiplexer, die optischen Filtern entsprechen. Wenn der üblicherweise den kürzesten Ringabschnitt nutzende Working-Kanal gestört ist, wird eine Protection-Verbindung über den längeren Ringabschnitt unter Verwendung derselben Wellenlänge hergestellt, d.h. das bisher über den gestörten Abschnitt gesendete Working-Signal wird "zurückgeschleift". Bei diesem Verfahren werden ebenso viele Protection-Kanäle wie Working-Kanäle mit einer entsprechenden Bandbreite benötigt. Ein auf diesem Prinzip aufbauendes Verfahren ist in der älteren Anmeldung DE 19 707 056 A1 beschrieben.

Aufgabe der Erfindung ist es, die Zuverlässigkeit eines mit einer Protection-Einrichtung ausgestatteten Ringnetzes zu verbessern.

Diese Aufgabe wird durch das im Anspruch 1 angegebene Verfahren gelöst. In einem unabhängigen Anspruch ist eine geeignete Anordnung angegeben. Vorteilhafte Weiterbildungen sind in den Unteransprüchen beschrieben.

Bei der Erfindung wird nur ein einziger Protection-Kanal vorgesehen, zu dem alle Terminals Zugang haben, d.h. Daten aussenden und Daten empfangen können. Im ungestörten Fall wird der Kanal von allen Terminals durchgeschaltet, während im Störungsfall eine Verbindung über den ungestörten längeren Ringabschnitt zwischen den betroffenen Terminals hergestellt wird. Wie der Working-Kanal kann auch der Protection-Kanal mehrere Unterkanäle mit mehreren Wellenlängen aufweisen, die Verbindungen zu unterschiedlichen Terminals herstellen.

Erhöhte Sicherheit wird durch die Verwendung einer zusätzlichen Umschaltbaugruppe erreicht, die bei einer defekten Working-Anschlussbaugruppe auf die zugehörige Protection-Anschlussbaugruppe umschaltet, ohne daß gleichzeitig auch auf die Protection-Verbindung umgeschaltet wird. Trotz fehlerhafter Leitungsbaugruppen steht somit der Protection-Kanal für die Protection-Verbindung bei Leitungsübertragungen zur Verfügung.

Die Zuverlässigkeit eines Ringnetzes wird dadurch erhöht, daß separate Working- und Protection-Leitungsbaugruppen (Anschlussbaugruppen) vorgesehen sind. Die Working- und die Protection-Signale werden gleichzeitig überprüft, um bei ebenfalls gestörten Protection-Verbindungen unnötiges Schalten zu verhindern.

Durch Verdoppeln der Terminaleinrichtungen (Multiplexer und Leitungsbaugruppen) und einer entsprechenden Umschalteinrichtung kann die Betriebssicherheit bei Geräteausfällen weiter erhöht werden.

Die Erfindung wird nun anhand von Ausführungsbeispielen näher erläutert.

Es zeigen
- Figur 1: ein Ringnetz mit Protection gemäß der Erfindung,
- Figur 2: einen Störungsfall in diesem Ringnetz,
- Figur 3: eine Protection-Einrichtung,
- Figur 4: eine Protection-Einrichtung mit zusätzlicher Leitungsbaugruppen-Protection und
- Figur 5: eine Protection-Einrichtung mit Terminal-Protection.

In Figur 1 ist ein Ringnetz dargestellt. Vier Terminals (Netzknoten) A, B, C, D sind über eine zur Protection-Einrichtung gehörenden Wellenlängen-Multiplex-Schalteinrichtung WDM/SW, die optische Wellenlängen-Multiplexer (Wavelength-Division-Multiplexer WDM) und optische Schalter SW sowie Überwachungs- und Steuereinrichtungen enthält, miteinander verbunden. Die Netzknoten können Add/Drop-Multiplexer ADM oder/und Terminal-Multiplexer TM aufweisen. Die Netzknoten sind über bestimmte Working-Kanäle W1, W2, ..., denen ein bestimmter Wellenlängebereich LW oder mehrere Einzelkanäle mit mehreren Wellenlängenbereichen zugeordnet sind, miteinander verbunden.

Im Beispiel ist das Terminal A über den Working-Kanal W1 mit dem Terminal B und über den Working-Kanal W2 mit dem Terminal D verbunden. Da im allgemeinen im gesamten Ringnetz eine maximale Übertragungsrate möglich ist, wird nur auch von nur einem Working-Kanal W gesprochen, der im allgemeinen über die einzelnen Abschnitte des Ringnetzes aber unterschiedliche Informationen mit häufig unterschiedlichen Datenraten überträgt. Ebenso können auch dieselben Wellenlängen auf unterschiedlichen Abschnitten verwendet werden.

Der Working-Kanal W1 weist z.B. (entsprechend der zu übertragenden Datenrate und dem verwendeten Modulationsverfahren) einen Wellenlängebereich LW auf, der beispielsweise zwei Einzelkanäle mit den Wellenlängen λ1, λ2 umfaßt. Der Einzelkanal mit der Wellenlänge λ1 verbindet das Terminal A mit dem Terminal B und ein weiterer Einzelkanal, der die Wellenlänge λ2 aufweist, verbindet das Terminal A mit dem Terminal C (entsprechend der Anzahl der miteinander verbundenen Add/Drop-Multiplexer und Terminal-Multiplexer können auch zwei Terminals durch Gruppen von Einzelkanälen miteinander verbunden werden). Die Datenübertragung zwischen Terminal B und Terminal C kann mittels einer weiteren Wellenlänge oder mittels der Wellenlänge λ1 erfolgen.

Für alle Terminals ist entsprechend ein einziger von allen nutzbarer Protection-Kanal P vorgesehen. Dieser weist eine Übertragungskapazität auf, die der maximal genutzten Übertragungskapazität auf einem Abschnitt des Ringes entspricht. Der Protection-Kanal und der Working-Kanal werden im Wellenlängenmultiplexverfahren über die gleichen Leitungen, die Fasern F1 und F2, übertragen, d.h. der im Protection-Kanal verwendete Wellenlängenbereich LP (oder die Wellenlängen) überschneidet sich mit keiner im Ringnetz verwendeten Wellenlänge.

In Figur 1 wird von einem Zweifaserring ausgegangen, bei dem die Übertragung in beiden Richtungen mit derselben Wellenlänge erfolgt. Ebenso kann jedoch ein Einfasernetz verwendet werden, bei dem den Übertragungsrichtungen unterschiedliche Wellenlängen zugeordnet werden und damit für Hin- und Rückrichtung die doppelte Übertragungsbandbreite erforderlich ist. Der Protection-Kanal nutzt jeweils dieselben Fasern, bzw. dieselbe Faser, jedoch in einem anderen Wellenlängenbereich.

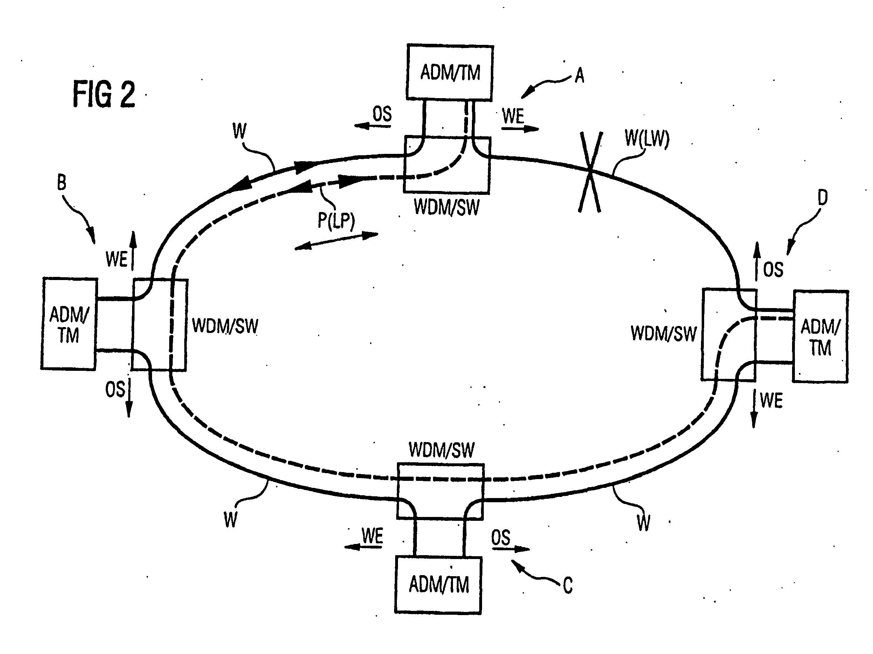

In Figur 2 wurde angenommen, daß die Verbindung zwischen dem Terminal (Netzknoten) A und dem Terminal (Netzknoten) D gestört ist. Der Datenaustausch zwischen den betroffenen Terminals erfolgt jetzt über den Protection-Kanal mittels der Wellenlänge LP über den langen ungestörten Weg. Die unbeteiligten Stationen B und C schleifen den Protection-Kanal mit Hilfe der Wellenlängen-Multiplexer-Schalteinrichtung WDM/SW durch.

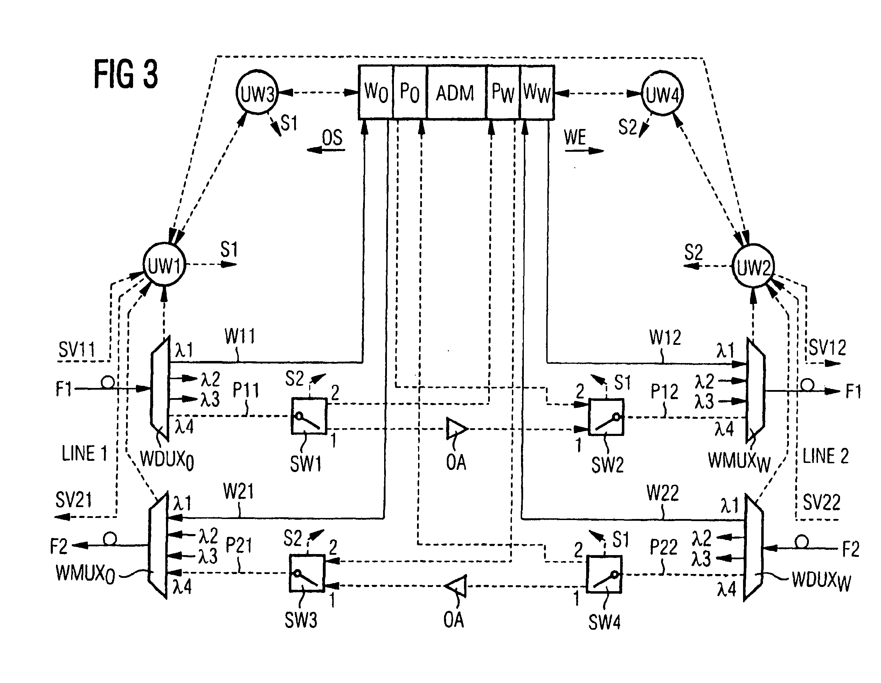

In Figur 3 ist die Wellenlängen-Multiplexer-Schalteinrichtung WDM/SW der Protection-Einrichtung eines Terminals (z.B. A) detailliert dargestellt. Die bidirektionalen Working-Kanäle sind in Working-Sendekanäle W12, W21 und Working-Empfangskanäle W11 und W22 aufgeteilt und durchgehend gezeichnet, die entsprechenden Protection-Kanäle P21, P12; P22, P11 sind dagegen gestrichelt gezeichnet. Als Beispiel ist ein Terminal mit einem Add/Drop-Multiplexer ADM dargestellt, der in jeder Übertragungsrichtung OS (Osten) und WE (Westen) eine working-Leitungsbaugruppe, Wₒ, W_{w} und eine Protection-Leitungsbaugruppe Pₒ, P_{w} aufweist (ein Terminal-Multiplexer, der nur für Punkt zu Punkt-Verbindungen geeignet ist, würde natürlich nur eine Working- und Protection-Leitungsbaugruppe aufweisen).

Ein Netzknoten kann auch mehrere Add/Drop- und Terminal-Multiplexer aufweisen. Entsprechende Leitungsbaugruppen würden dann entsprechend viele Ein- und Ausgangssignale empfangen und aussenden, die verschiedene Wellenlängen aufweisen.

In dem vereinfacht dargestellten Schaltbild werden nur Verbindungen zum jeweils direkt benachbarten Terminal unterhalten. Vom östlich benachbarten Terminal werden über eine erste Faser F1 der Verbindung LINE1 in einem Working-Empfangskanal W11, der Teil des bidirektionellen Working-Kanals W ist, Working-Signale empfangen und über einen Wellenlängen-Demultiplexer WDUXₒ zur Working-Leitungsbaugruppe Wₒ weitergeleitet. Von dieser Leitungsbaugruppe wird ein Working-Signal über einen Wellenlängen-Multiplexer WMUXₒ über eine zweite Faser F2 in einem Working-Sendekanal W21, der zusammen mit dem Working-Empfangskanal den Working-Kanal W bildet, an den östlich benachbarten Netzknoten übertragen.

In derselben Weise erfolgt der Datenaustausch über die Verbindung LINE2 mit dem westlich benachbarten Terminal über die Faser F1, über die jetzt aber gesendet wird, und über die Faser F2, über die jetzt empfangen wird, wobei die von den Leitungsbaugruppen gesendeten und empfangenen Working-Signale wieder über einen Wellenlängen-Multiplexer WMUX_{w} und einen Wellenlängen-Demultiplexer WDUX_{w} geführt werden.

Da die Working-Signale den Working-Kanälen fest zugeordnet sind, werden für sie dieselben Bezugszeichen verwendet.

Überwachungseinrichtungen UW1 und UW2 sind für die Ost- bzw. die Westrichtung den Wellenlängen-Multiplexern und den Wellenlängen-Demultiplexern zugeordnet; weitere Überwachungseinrichtungen UW3 und UW4 sind dem Add/Drop-Multiplexer ADM zugeordnet (ein Terminal-Multiplexer käme mit weniger Überwachungsfunktionen aus).

Wenn in östlicher und westlicher Verkehrsrichtung jeweils nur ein Sende-Workingkanal und ein Empfangs-Workingkanal vorhanden ist, reichen vier Schalter SW1 bis SW4 aus, um entweder das Protection-Signal, bzw. den Protection-Kanal, durchzuschleifen und gegebenenfalls in einem optischen Verstärker OA zu verstärken oder es einer Protection-Leitungsbaugruppe zuzuführen bzw. ein Protection-Sendesignal anstelle des Working-Sendesignals einzufügen.

Weist ein Terminal dagegen mehrere Add/Drop-Multiplexer oder Terminal-Multiplexer mit einer entsprechenden Anzahl von Leitungsbaugruppen, d.h. Ein- und Ausgängen auf, die über Working-Einzelkanäle mit unterschiedlichen Wellenlängen verbunden sind, so muß die Anzahl der Schaltergruppen entsprechend vervielfacht werden.

In Figur 3 sind Working-Einzelkanäle durch die Angabe der Wellenlänge λ1 und Protection-Einzelkanäle durch λ4 bezeichnet. Die entsprechenden Signale werden durch Wellenlängen-Demultiplexer und -Multiplexer wellenlängenindividuell ausgekoppelt bzw. eingekoppelt.

Werden durch die Working-Einzelkanäle auch nicht direkt benachbarte Terminals miteinander verbunden, so müssen im Störungsfall alle entsprechenden Verbindungen über die Protection-Einzelkanäle hergestellt werden. Diese von einer Störung betroffenen Terminals werden ebenfalls als "benachbarte Terminals" betrachtet.

Die Schalter sind für den störungsfreien Fall dargestellt. Bei einer Unterbrechung der Fasern F1, F2 der Verbindung LINE 2 in westlicher Richtung (Figur 2) empfangen die Terminals A und D keine Daten. Hierdurch wird die Umschaltung auf Protection-Betrieb ausgelöst. Hierzu werden durch Steuersignale S1 und S2 die Schalter **SW1** und **SW3** betätigt, um nunmehr die Daten von der Protection-Leitungsbaugruppe P_{w} über den Schalter SW3 im Protection-Kanal P21 in östlicher Richtung auszusenden und Daten aus östlicher Richtung im Protection-Kanal P11 zu empfangen und der Protection-Leitungsbaugruppe P_{w} zuzuführen.

Die Umschaltung auf Protectionbetrieb kann über Service-Kanäle SV11, SV21 und SV12, SV22 gesteuert werden. Hierzu können unterschiedliche Protokolle verwendet werden. Ebenso werden über diese Service-Kanäle die anderen Netzknoten daran gehindert, weitere unzulässige Umschaltvorgänge vorzunehmen.

Bei einem Ausfall einer Working-Leitungsbaugruppe, beispielsweise der Working-Leitungsbaugruppe W_{w} veranlaßt die Überwachung ebenfalls ein Umschalten auf die Protection-Verbindung und eine Betätigung der Schalter SW1 und SW3. Die Überwachungen UW1 bis UW4 - dies sind eigentlich Funktionsblöcke einer Überwachungseinheit - korrespondieren miteinander und können über die Service-Kanäle die Umschaltvorgänge steuern. Der Umschaltvorgang im benachbarten Terminal kann aber auch durch das Fehlen von Empfangsdaten ausgelöst werden.

Bei einer Störung einer Working-Leitungsbaugruppe als auch bei einem gestörten Verbindungsabschnitt erfolgt dieselbe Protection-Umschaltung, bei der sowohl auf die Protection-Leitungsbaugruppe als auch auf den Protection-Kanal umgeschaltet wird. Fällt gleichzeitig die Protection-Leitungsbaugruppe des anderen Terminals aus, ist eine Ersatzschaltung nicht mehr möglich. Das gilt ebenso bei einer Störung der Working-Verbindung und der Störung einer zugehörigen Protection-Leitungsbaugruppe.

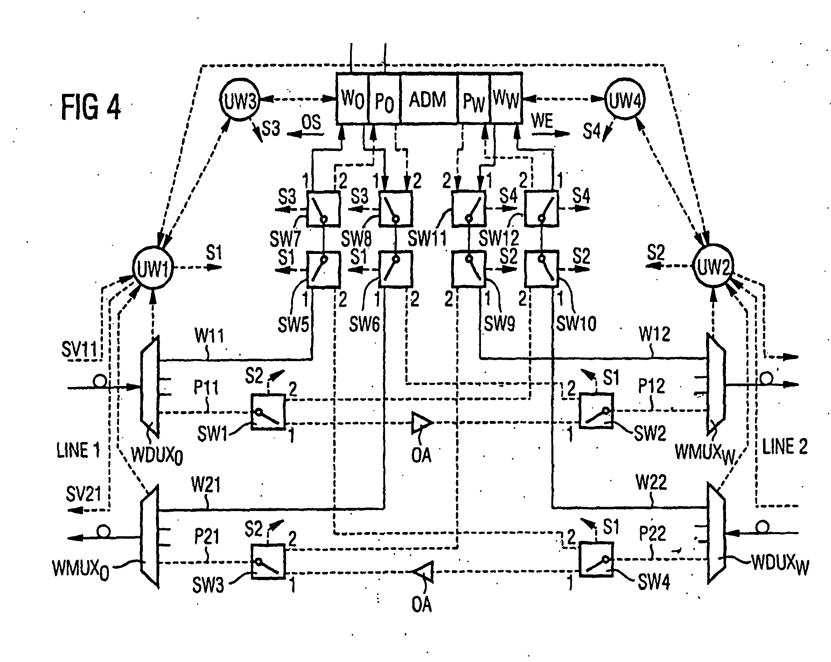

Ein verbessertes Protection-Verfahren wird anhand Figur 4 erläutert. Das Prinzipschaltbild enthält zusätzlich Umschalteinheiten SW5 bis SW8 bzw. SW9 bis SW12, die es gestatten, für jede Verbindungsrichtung (LINE1 oder LINE2) sowohl zwischen dem Working-Empfangskanal und dem Protection-Empfangskanal bzw. dem Working-Sendekanal und dem Protection-Sendekanal zu wählen als auch den ausgewählten Kanal mit der Working-Leitungsbaugruppe oder mit der Protection-Leitungsbaugruppe zu verbinden. Jedes Schaltfeld besteht aus vier Schaltern SW5 bis SW8 bzw. SW9 bis SW12. Jeweils zwei Schalter sind in Reihe geschaltet, wobei die Umschaltkontakte miteinander verbunden sind (ebenso ist eine Parallelschaltung der Schalter möglich).

Bei Ausfall der Working-Leitungsbaugruppe W_{w} veranlaßt die Überwachung UW4 über deren Steuersignal S4 die Schalter SW11 und SW12 zum Umschalten in die strichliert dargestellte Stellung 2, in der der Working-Sendekanal W12 und der Working-Empfangskanal W22 nun ersatzweise an die entsprechende Protection-Leitungsbaugruppe P_{w} angeschaltet werden. Die Abwicklung des Datenaustausches erfolgt also weiterhin über die selben Fasern. In diesem Fall muß an den benachbarten Netzknoten keine Fehlermeldung erfolgen, bzw. es wird weiterhin die Meldung ausgesendet, daß keine Protection-Umschaltung durchgeführt werden soll. Daher stören auch weitere Ausfälle der Leitungsbaugruppen in anderen Terminals nicht.

Bei einer (zusätzlichen) Leitungsunterbrechung erfolgt die selbe Umschaltung, wie bereits anhand der Figur 3 beschrieben.

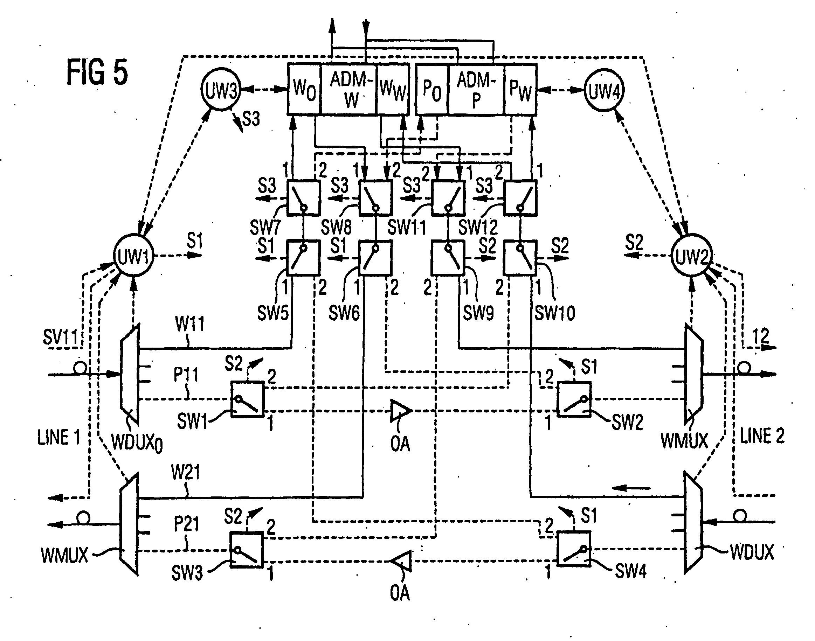

Eine weitere Variante des Protection-Verfahrens ist in Figur 5 dargestellt. Hier sind die Leitungsbaugruppen LB nicht redundant ausgeführt, dafür ist jedoch der komplette Working-Multiplexer ADM-W einschließlich der Leitungsbaugruppen Wₒ, W_{w} gedoppelt. Dem Working-Multiplexer ist die Überwachung UW3 zugeordnet, die bei einer Störung der eigentlichen Multiplexereinrichtung oder seiner Leitungsbaugruppen auf einen Protection-Multiplexer ADM-P mit seinen Leitungsbaugruppen Pₒ, P_{w} umschaltet. Dies erfolgt durch Betätigung der Schalter SW7, SW8, SW11 und SW12 der Umschalteinheiten.

Bei einer Leitungsstörung erfolgt die Umschaltung auf die Protection-Kanäle über die Schalter SW5, SW6, SW9 und SW10 entsprechend dem vorstehend beschriebenen Verfahren. Eine zusätzliche Überwachungsschaltung UW4 kann zur Überwachung des Protection-Multiplexers eingesetzt werden, wenn beide Multiplexer gleichberechtigt arbeiten sollen.

Zu ergänzen ist noch, daß es bei einer Störung eines Working-Kanals in nur einer Übertragungsrichtung, z.B. durch einen Fehler in einem Regenerator, ausreicht nur für diese einseitig gestörte Verbindung eine Ersatzverbindung zu schalten. Die dargestellten optischen Schalter können durch einen optischen Crossconnector ersetzt werden.

## Patentansprüche

1. Verfahren zur Datenübertragung im Wellenlängenmultiplex verfahren in einem bidirektionalen Working-Kanal (W) zwischen mehreren Terminals (A, B; C; D) eines optischen Ringnetzes mit einer Protection-Einrichtung, die bei einer gestörten Datenübertragung eine Protection-Verbindung im Wellenlängenmultiplexverfahren in einem Protection-Kanal (P) über den ungestörten Abschnitt (LINE 1) des Ringnetzes ermöglicht, wobei ein bidirektionaler Protection-Kanal (P), der mindestens die Übertragungskapazität des Working-Kanals (W) besitzt, alle Terminals miteinander verbindet,
**dadurch gekennzeichnet,**
**daß** bei einer Störung einer Working-Leitungsbaugruppe (Wₒ) auf eine zugeordnete Protection-Leitungsbaugruppe (Pₒ) umgeschaltet wird und die Verbindung über den Working-Kanal (W; W21, W11) aufrechterhalten wird und
**daß** bei einer Störung eines Leitungsabschnittes (LINE 2) zwischen benachbarten Terminals (A, D) eine Protection-Verbindung im Protection-Kanal (P; P21, P11) über die ungestörten Leitungsabschnitte (LINE 1) des Ringnetzes hergestellt wird und die nicht betroffenen Terminals (B, C) den Protection-Kanal (P; P21, P11) durchschleifen.

2. Verfahren nach Anspruch 1,
**dadurch gekennzeichnet,**
**daß** im ungestörten Betriebsfall alle Terminals (A, B, C, D) den Protection-Kanal (P) durchschleifen.

3. Verfahren nach einem der vorhergehenden Ansprüche,
**dadurch gekennzeichnet,**
**daß** die Datenübertragung über zwei getrennte Fasern (F1, F2) erfolgt.

4. Verfahren nach Anspruch 1 oder 3,
**dadurch gekennzeichnet,**
**daß** im Working-Kanal (W; W21, W11) mehrere Einzelkanäle mit unterschiedlichen Wellenlängen (λ1, λ2, ...) übertragen werden und
**daß** im Protection-Kanal (P; P21, P11) entsprechende Einzelkanäle mit unterschiedlichen Wellenlängen übertragen werden.

5. Verfahren nach Anspruch 4,
**dadurch gekennzeichnet,**
**daß** im Working-Kanal (W) mehrere Working-Einzelkanäle (W21, W11) mit unterschiedlichen Wellenlängen (λ1, ...) zwischen mehr als zwei Terminals (A, B, C, D) übertragen werden, wobei von einer Störung nicht betroffenen Terminals (B, C) die entsprechenden Working-Einzelkanäle (W21, W11) durchschalten und
**daß** im Protection-Kanal (P) entsprechende Protection-Einzelkanäle (P21, P11) übertragen werden, deren Wellenlängen unterschiedlich zu den Wellenlängen der über dieselbe Faser (F1, F2) übertragenen Working-Einzelkanäle sind.

6. Verfahren nach einem der Ansprüche 1 bis 5,
**dadurch gekennzeichnet,**
**daß** die Übertragung von Working-Signalen (W) über einen Working-Multiplexer (ADM-W) der Terminals (A, B, C, D) erfolgt und
**daß** bei einer Störung des Working-Multiplexers (ADM-W) oder seiner zugeordneten Leitungsbaugruppen (Wₒ, W_{w}) auf einen ersatzweise vorgesehenen Protection-Multiplexer (ADM-P) einschließlich seiner Leitungsbaugruppen (Pₒ, P_{w}) umgeschaltet wird.

7. Anordnung zur Datenübertragung im Wellenlängenmultiplexverfahren zwischen mehreren Terminals (A, B, C, D) in einem optischen Ringnetz, wobei die Terminals eine Protection-Einrichtung aufweisen, die im Störungsfall die Datenübertragung im Wellenlängenmultiplexverfahren über die ungestörten Abschnitte (LINE 1) des Ringnetzes in einem Protection-Kanal (P) ermöglicht, wobei jedes Terminal (A) Wellenlängen-Demultiplexer (WDUXₒ, WDUX_{w}) aufweist, über den wellenlängenindividuell Working-Signale (W11, W22) und Protection-Signale (P11, P12) ausgekoppelt werden, und Wellenlängen-Multiplexer (WMUXₒ, WMUX_{w}) aufweist, über den wellenlängenindividuell Working-Signale (W21, W12) und Protection-Signale (P21, P22) eingekoppelt werden, wobei ein bidirektionaler Protection-Kanal (P), der mindestens die Übertragungskapazität des Working-Kanals (W) hat, vorgesehen ist, der alle Terminals (A, B, C, D) miteinander verbindet, und in jedem Terminal (A, B, C, D) für jede Übertragungsrichtung jeweils eine Working-Leitungsbaugruppe (Wₒ, W_{w}) für das Senden und Empfangen von Working-Signalen (W21, W11; W12, W22) und zugehörige Protection-Leitungsbaugruppen (Pₒ; P_{w}) für das Senden und Empfangen von Protection-Signalen (P21, P11; P12, P22) angeordnet sind,
**dadurch gekennzeichnet,**
**daß** den Working-Leitungsbaugruppen (Wₒ, W_{w}) und den zugehörigen Protection-Leitungsbaugruppen (Pₒ, P_{w}) jeweils eine Umschalteinrichtung (SW5 - SW8; SW9 - SW12) zugeordnet ist, die bei einer Störung einer der Working-Leitungsbaugruppen (W_{w}) eine Umschaltung auf die zugeordnete Protection-Leitungsbaugruppe (P_{w}) durchführt, dass optische Schalter (SW1, SW2, SW3, SW4) zwischen Ausgängen der Wellenlängen-Demultiplexer (WDUXₒ, WDUX_{w}) und Eingängen der Wellenlängen-Multiplexer (WMUXₒ, WMUX_{w}) angeordnet sind, die bei einer ungestörten Verbindung den Protection-Kanal (P; P21, P11) durchschleifen und bei einer Störung eines Verbindungsabschnittes (LINE 2) zwischen benachbarten Terminals (A, D) jeweils über zweite Anschlüsse der optischen Schalter (SW1, SW3) eine Protection-Verbindung über den Protection-Kanal (P; P21, P11; ...) über die ungestörten Abschnitte (LINE 1) des Ringnetzes herstellen.

8. Anordnung nach Anspruch 7,
**dadurch gekennzeichnet,**
**daß** in einem Terminal ein Working-Multiplexer (ADM-W) und ein zugeordneter Protection-Multiplexer (ADM-P) mit zugehörigen Leitungsbaugruppen (Pₒ, P_{w}) vorgesehen sind und
**dass** eine diesen Multiplexern zugeordnete Umschalteinrichtung (SW5 bis SW12) vorgesehen ist, die in Abhängigkeit von der Art der vorliegenden Störung eine separate Umschaltung zwischen dem Working-Multiplexer und dem Protection-Multiplexer (ADM-P) sowie zwischen dem Working-Kanal (W) und über die optischen Schalter (SW1, SW2, SW3, SW4) dem Protection-Kanal (P) ermöglicht.

## Claims

1. Method for data transmission in the wavelength division multiplexing procedure in a bidirectional working channel (W) between a number of terminals (A, B, C, D) of an optical ring network with a protection device which, before a fault in data transmission, allows a protection connection in wavelength multiplex division procedure in a protection channel (P) via the undisturbed section (LINE 1) of the ring network, with a bidirectional protection channel (P) switch possessing at least the transmission capacity of the working channel (W), connecting all terminals to one another,
**characterized in that**
for a fault in a working line module (Wₒ) a switchover is made to an assigned protection line module (Pₒ) and the connection is maintained via the working channel (W; W21, W11) and for a fault in a line section (LINE 2) between adjacent terminals (A, D) a protection connection is established in the protection channel (P; P21, P11) via the undisturbed line sections (LINE 1) of the ring network and the terminals (B, C) not involved loop the protection channel (P; P21, P11) through.

2. Method in accordance with claim 1,
**characterized in that**
in the undisturbed operating case all terminals (A, B, C, D) loop the protection channel (P) through.

3. Method in accordance with one of the previous claims,
**characterized in that**,
the data is transmitted over two separate fibres (F1, F2).

4. Method in accordance with claim 1 or 3,
**characterized in that**
a number of individual channels with different wavelengths λ1, λ2, ...) are transmitted in the working-channel (W; W21, W11) and
corresponding individual channels with different wavelengths are transmitted in the protection channel (P; P21, P11).

5. Method in accordance with claim 4,
**characterized in that**
a number of individual working channels (W21, W11) are transmitted with different wavelengths (λ1, ... in the working channel (W) ) between more than two terminals (A, B, C, D), with terminals (B, C) not affected by a fault through-connecting the corresponding individual working channels (W21, W11) and
corresponding individual protection channels (P21, P11) are transmitted in the protection channel (P) of which the wavelengths are different to the wavelengths of individual working channels transmitted via the same fibres (F1, F2).

6. Method in accordance with one of the claims 1 to 5,
**characterized in that**
working signals (W) are transmitted via a working multiplexer (ADM-W) of the terminals (A, B, C, D) and
for a fault in the working multiplexer (ADM-W) or its assigned line modules (Wₒ, W_{w}) a switchover is made to a protection multiplexer (ADM-P) including its line modules (Pₒ, P_{w}) provided for protection switching.

7. Arrangement for data transmission in the wavelength division multiplexing procedure between a number of terminals (A, B, C, D) in an optical ring network, with the terminals featuring a protection device which, in the event of faults allows data to be transmitted in the wavelength multiplex division procedure over the undisturbed sections (LINE 1) of the ring network in a protection channel (P), with each terminal (A) featuring wavelength division demultiplexers (WDUXₒ, WDUX_{w}), via which the wavelength-individual working signals (W11, W22) and protection signals (P11, P12) are dropped, and wavelength division multiplexers (WMUXₒ, WMUX_{w}) via which the wavelength-individual working signals (W21, W12) and protection signals (P21, P22) are added, with a bidirectional protection channel (P), which has at least the transmission capacity of the working channel (W) being provided, which connects all terminals (A, B, C, D) to each other, and in each terminal (A, B, C, D) for each direction of transmission a working line module (Wₒ, W_{w}) for transmitting and receiving working signals (W21, W11; W12, W22) and the associated protection line modules (Pₒ; P_{w}) for transmitting and receiving protection signals (P21, P11; P12, P22) are arranged,
**characterized in that**,
The working line modules (Wₒ, W_{w}) and the associated protection line modules (Pₒ, P_{w}) are each assigned a switchover unit (SW5 - SW8; SW9 - SW12) which, for a fault in one of the working line modules, (W_{w}) performs a switchover to the assigned protection line module (P_{w}),
optical switches (SW1, SW2, SW3, SW4) are arranged between outputs of the wavelength division demultiplexers (WDUXₒ, WDUX_{w}) and inputs of the wavelength division multiplexers (WMUXₒ, WMUX_{w}), which for an undisturbed connection loop the protection channel (P; P21, P11) through and for a fault on a connection section (LINE 2) between adjacent terminals (A, D), via second ports of the optical switches (SW1, SW3) in each case establish a protection connection via the protection channel (P; P21, P11; ...) over the undisturbed sections (LINE 1) of the ring network.

8. Arrangement according to Claim 7,
**characterized in that**,
a working multiplexer (ADM-W) and an assigned protection multiplexer (ADM-P) with associated line modules (Pₒ, P_{w}) are provided in a terminal and
that a switchover device assigned to these multiplexers (SW5 to SW12) is provided, which, depending on the type of fault present, allows a separate switchover between the working multiplexer and the protection multiplexer (ADM-P) as well as between the working channel (W) and, via the optical switches (SW1, SW2, SW3, SW4), the protection channel (P).

## Revendications

1. Procédé de transmission de données selon le procédé de multiplexage en longueur d'onde dans un canal de travail (W) bidirectionnel entre plusieurs terminaux (A, B ; C ; D) d'un réseau annulaire optique comprenant un dispositif de protection qui, en cas d'une transmission de données perturbée, permet une connexion de protection dans un canal de protection (P) selon le procédé de multiplexage en longueur d'onde via la section non perturbée (LINE 1) du réseau annulaire, un canal de protection (P) bidirectionnel, qui possède au moins la capacité de transmission du canal de travail (W), raccordant tous les terminaux entre eux,
**caractérisé en ce**
**que**, en cas d'une perturbation d'un sous-groupe de lignes de travail (Wₒ), une commutation sur un sous-groupe de lignes de protection (Pₒ) associé est effectuée et la connexion est maintenue via le canal de travail (W ; W21, W11) et
en ce que, en cas d'une perturbation d'une section de ligne (LINE 2) entre des terminaux voisins (A, D), une connexion de protection est établie dans le canal de protection (P ; P21, P11) via la section de ligne non perturbée (LINE 1) du réseau annulaire et en ce que les terminaux non associés (B, C) bouclent le canal de protection (P ; P21, P11).

2. Procédé selon la revendication 1,
**caractérisé en ce**
**qu'**en cas de fonctionnement non perturbé, tous les terminaux (A, B, C, D) bouclent le canal de protection (P).

3. Procédé selon l'une quelconque des revendications précédentes,
**caractérisé en ce**
**que** la transmission de données est réalisée par l'intermédiaire de deux fibres séparées (F1, F2).

4. Procédé selon la revendication 1 ou 3,
**caractérisé en ce**
**que** plusieurs canaux individuels ayant différentes longueurs d'onde (λ1, λ2, ...) sont transmis dans le canal de travail (W ; W21, W11) et
en ce que des canaux individuels correspondants ayant différentes longueurs d'onde sont transmis dans le canal de protection (P ; P21, P11).

5. Procédé selon la revendication 4,
**caractérisé en ce**
**que** plusieurs canaux de travail individuels (W21, W11) ayant différentes longueurs d'onde (λ1, ...) sont transmis dans le canal de travail (W) entre plus de deux terminaux (A, B, C, D), les terminaux (B, C) non associés par une perturbation connectant les canaux de travail individuels correspondants (W21, W11) et
en ce que des canaux de protection individuels (P21, P11) correspondants sont transmis dans le canal de protection (P), dont les longueurs d'onde sont différentes par rapport aux longueurs d'onde des canaux de travail individuels transmis par l'intermédiaire de la même fibre (F1, F2).

6. Procédé selon l'une quelconque des revendications 1 à 5,
**caractérisé en ce**
**que** la transmission de signaux de travail (W) est réalisée par l'intermédiaire d'un multiplexeur de travail (ADM-W) des terminaux (A, B, C, D) et
en ce que, lors d'un dérangement du multiplexeur de travail (ADM-W) ou de ses sous-groupes de ligne correspondants (Wₒ, W_{w}), une commutation s'effectue sur un multiplexeur de protection (ADM-P) prévu en remplacement, y compris ses sous-groupes de lignes (Pₒ, P_{w}).

7. Dispositif de transmission de données selon le procédé de multiplexage en longueur d'onde entre plusieurs terminaux (A, B, C, D) dans un réseau annulaire optique, les terminaux présentant un dispositif de protection qui, en cas de perturbation, permet la transmission des données selon le procédé de multiplexage en longueur d'onde par l'intermédiaire de la section non perturbée (LINE 1) du réseau annulaire dans un canal de protection (P), chaque terminal (A) présentant un démultiplexeur en longueur d'onde (WDUXₒ, WDUX_{w}), par l'intermédiaire duquel des signaux de travail (W11, W22) et des signaux de protection (P11, P12) sont découplés de manière individuelle à la longueur d'onde, et présentant un multiplexeur en longueur d'onde (WMUXₒ, WMUX_{w}), par l'intermédiaire duquel des signaux de travail (W21, W12) et des signaux de protection (P21, P22) sont couplés de manière individuelle à la longueur d'onde, un canal de protection bidirectionnel (P), qui a au moins la capacité de transmission du canal de travail (W), étant prévu, qui raccorde tous les terminaux (A, B, C, D) entre eux, et un sous-groupe de lignes de travail (Wₒ, W_{w}) étant respectivement disposé, dans chaque terminal (A, B, C, D) pour chaque sens de transmission, pour émettre et recevoir des signaux de travail (W21, W11 ; W12, W22) et des sous-groupes de lignes de protection correspondants (Pₒ ; P_{w}) étant respectivement disposés, dans chaque terminal (A, B, C, D) pour chaque sens de transmission, pour émettre et recevoir des signaux de protection (P21, P11 ; P12, P22),
**caractérisé en ce**
**qu'**un dispositif de commutation (SW5 - SW8 ; SW9 - SW12) est respectivement affecté aux sous-groupes de lignes de travail (Wₒ, W_{w}) et aux sous-groupes de lignes de protection correspondants (Pₒ, P_{w}), ce dispositif de commutation exécutant, lors d'une perturbation de l'un des sous-groupes de lignes de travail (W_{w}), une commutation sur le sous-groupe de lignes de protection affecté (P_{w}),
en ce que des commutateurs optiques (SW1, SW2, SW3, SW4) sont disposés entre des sorties des démultiplexeurs en longueur d'onde (WDUXₒ, WDUX_{w}) et des entrées des multiplexeurs en longueur d'onde (WMUXₒ, WMUX_{w}), qui, lors d'une connexion non perturbée, bouclent le canal de protection (P ; P21, P11) et, lors d'une perturbation d'une section de connexion (LINE 2) entre des terminaux voisins (A, D), établissent, respectivement par l'intermédiaire de deuxièmes raccordements des commutateurs optiques (SW1, SW2), une connexion de protection via le canal de protection (P ; P21, P11 ; ...) par l'intermédiaire des sections non perturbées (LINE 1) du réseau annulaire.

8. Dispositif selon la revendication 7,
**caractérisé en ce**
**qu'**un multiplexeur de travail (ADM-W) et un multiplexeur de protection correspondant (ADM-P) comprenant des sous-groupes de lignes correspondants (Pₒ, P_{w}) sont prévus dans un terminal et
en ce qu'un dispositif de commutation (SW5 à SW12) affecté à ces multiplexeurs est prévu, qui, en fonction du type de la perturbation présente, permet une commutation séparée entre le multiplexeur de travail et le multiplexeur de protection (ADM-P) ainsi qu'entre le canal de travail (W) et, par l'intermédiaire des commutateurs optiques (SW1, SW2, SW3, SW4), le canal de protection (P).
